Europäisches Patentamt

European Patent Office

Office européen des brevets

(19)

(11) Publication number: **0 265 681**
**B1**

(12) **EUROPEAN PATENT SPECIFICATION**

(45) Date of publication of the patent specification:
**12.12.90**

(51) Int. Cl.⁵: **F16F 13/00**

(21) Application number: **87114151.1**

(22) Date of filing: **28.09.87**

(54) **Damping device.**

(30) Priority: **31.10.86 IT 2219386**

(43) Date of publication of application:
**04.05.88 Bulletin 88/18**

(45) Publication of the grant of the patent:
**12.12.90 Bulletin 90/50**

(84) Designated Contracting States:
**DE ES FR GB SE**

(56) References cited:
**EP-A- 0 040 290**
**EP-A- 0 156 697**
**EP-A- 0 231 898**

(73) Proprietor: **PIRELLI SISTEMI ANTIVIBRANTI S.P.A.,**
**Piazzale Cadorna, 5, I-20123 Milan(IT)**

(72) Inventor: **Vanessi, Giovanni, Via Alfieri, 60, I-20099 Sesto**
**S. Giovanni Milan(IT)**

(74) Representative: **Mazzarella, Vincenzo et al, Pirelli S.p.A.**
**Servizio Brevetti Piazzale Cadorna, 5, I-20123 Milano(IT)**

ACTORUM AG

## Description

The present invention concerns a hydraulic type of damping device that is disposed between an oscillating mass and a fixed structure relative to the oscillating mass, and even more particularly, the invention refers to a damping device of the hydraulic type, wherein a low-viscosity liquid is made to pass, through forcing means, through a conduit for damping the low-frequency vibrations of a great amplitude, to which the oscillating mass is subjected.

Usually damping devices of the type cited above, can find use in various industrial application, for example, they are disposed between an oscillating mass constituted by the engine of a motor-vehicle and the body-chassis of the vehicle itself.

Generally speaking, according to some solutions hydraulic damping devices can comprise a rigid container, an elastomeric membrane that forms the lid of the container, an elastomeric diaphragm which separates the space inside the container into two chambers, respectively the upper and the lower, a second membrane forming the base of the second chamber, a low-viscosity liquid being disposed in both these two chambers.

The upper and lower chambers are hydraulically connected to one another by an annular conduit extended for a determined arc, that is provided with two extremities one present in the upper chamber and the other in the lower chamber.

In a device of this type, when the mass is oscillating with a low-frequency and small amplitude, for example, with a frequency comprised between 100 and 200 Hz. and an amplitude comprised between 0,1 and 0,2 mm, practically speaking, no shifting of the liquid is had, between the first and second chambers, because, owing to the speed with which the oscillations take place, this liquid is unable to traverse the annular conduit chosen with apt dimensions.

The pressure variations and volume variations in the liquid, are absorbed by the elastomeric deformation of the membrane that forms the lid and by the shiftings of the diaphragm between two extreme positions.

When the mass oscillates, with a low-frequency and a great amplitude, for example, with frequency values between 5 and 30 Hz., and amplitudes between 1 and 5 mm, it so happens that the diaphragm is brought up against the opposite fixed surfaces joined to the container walls and the liquid is forced to pass through the annular conduit with dissipating energy owing to viscous damping. In practice, in the cited devices, the geometrical dimensions of the annular conduit, the length and value of the transversal section, are chosen in such a way as to allow the passage of the liquid between the first and the second chamber, and vice-versa, at a predetermined value of low-frequence and great amplitude, with a corresponding damping of the relative oscillation.

The known devices, generally comprise an annular conduit that is realized by approaching two rigid parts together.

Moreover, the two rigid parts, that are distanced apart from the conduit, form special pressing of means the outermost annular edge of the elastomeric diaphragm.

In said devices, due to the high pressure with which the liquid is forced into the annular conduit, could happen the drawing of the liquid, through the contacting surfaces of the two halves of the conduit itself.

As can well be understood, any such drawing, is not acceptable, since it causes the viscous damping moreover, in the cited devices, the extra pressure of the liquid tends to draw apart the two rigid halves forming the conduit and hence, to diminish the pressure of the pressing means upon the diaphragm to be irregular at the predetermined frequencies.

Therefore, the known devices possess the drawback of their lacking in any reliable fluid-tight sealing in the annular conduit and in their not having a satisfactory locking action, at the edges of the elastomeric diaphragm.

According to EP-A 0 156 697 a type of hydraulic damping device may comprise the damping channel bounded externally and above by two corresponding surfaces formed in the base of elastic wall.

Due to the above characteristic the liquid forced at high pressures into the channel could spread apart the elastomeric parts in contact externally and above with the drawback of the drawing out of the liquid from the conduit toward the outside.

Moreover, even allowing that these cited drawbacks can be overcome with a simple realization that will prove to be reliable with the passing of time, it has also been verified that the known devices present and excessive rigidness when faced with high-frequencies i.e. the known devices tend to transmit with values unaltered or anyway, with high values, the oscillations of high frequency and small amplitude, to the vehicle body and hence, also to the passengers inside the vehicle.

The object of the present invention is a hydraulic type of dumping device disposed between mass oscillating in the direction of the device axis and a structure that is fixed relatively to the oscillating mass, the said device comprising a rigid container delimited by a lateral wall and by a base, a first elastomeric membrane forming the container-lid, an elastomeric diaphragm defined by a central plane substantially perpendicular to the direction of the oscillations, said diaphragm dividing the space inside the container into two chambers, respectively the upper and the lower, a second elastomeric membrane being connected, in a fluid manner, to the lateral wall of the container, said second membrane forming the base of said lower chamber, with two stop-limit elements disposed at a distance apart from the two opposite surfaces of the diaphragm, and a low viscosity liquid introduced into the said two chambers, an annular conduit provided with two extremities hydraulically connected to said first and second chambers respectively, for damping the oscillations of a low frequency and a high amplitude of the said oscillating mass, the said elastomeric diaphragm being extended till upto the annular damping conduit and forming the portion of the conduit wall that results radially innermost in the container, said diaphragm comprising a first part delimited by two surfaces opposite and parallel to each other, which is subjected to movement in the presence of vibrations of a high frequency and small amplitude, and a second peripherical part which lies in a plane axial to the device and perpendicular to the first part, said device being characterized by the fact that said conduit is formed by two halves of a rigid structure which are symmetrical with respect to a central plane perpendicular to the direction of the vibrations transmitted from the said oscillating mass to the liquid in the container, the said two halves forming a transversal section that comprises the outermost side of the conduit, two opposite bases that are parallel to the said central plane, and two prolongations of said two opposite bases inwardly inclined to the central plane, the fourth side in said transversal section, being formed by the radially outermost annular portion of the diaphragm, said annular portion resulting in contact against said prolongations of said two bases, each one of the two halves of said rigid structure, comprising an aperture upon its base, the two apertures of said two forming respectively the entry and the exit of the conduit for allowing the passage of the liquid from the upper to the lower chamber and vice-versa.

The present invention will now be better understood from the following detailed description, made solely by way of non-limiting example, with making reference to the FIGURES of the attached drawing sheets, whereby:

FIG. 1 - shows the device of the invention, in an axial plane.

FIG. 2 - shows in a cross-section, a detail of the device of FIG. 1.

FIG. 3 - shows one of the two rigid-halves of the device, apt or forming the hydraulic damping conduit.

FIG. 4 - shows a top-view of a detail of FIG. 3.

FIG. 5 - shows the configuration of the rigid conduit, along the line 1-1 of FIG. 3.

FIGS. 6 and 7 - show two transversal sections, of the elastomeric diaphragm in the device.

FIG. 8 - shows a top-view of the diaphragm of FIGS. 6 and 7.

FIG. 9 - shows the configuration of the diaphragm, taken along the line L-L of FIG. 8.

FIG. 10 - shows a preferred form of embodiment of the ridge elements, within whose limits the diaphragm can oscillate.

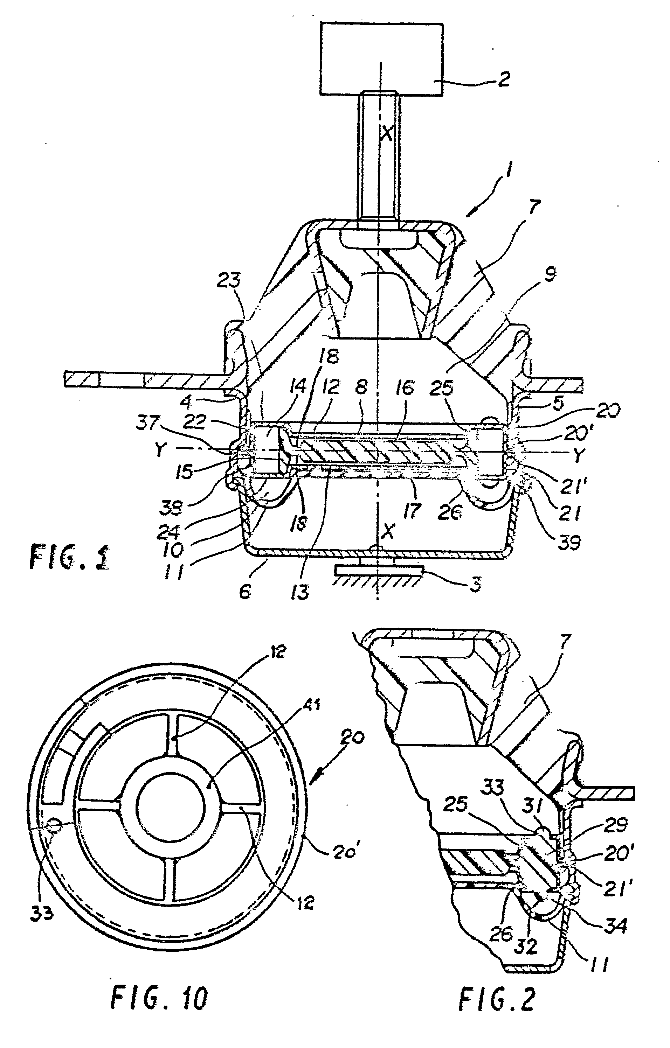

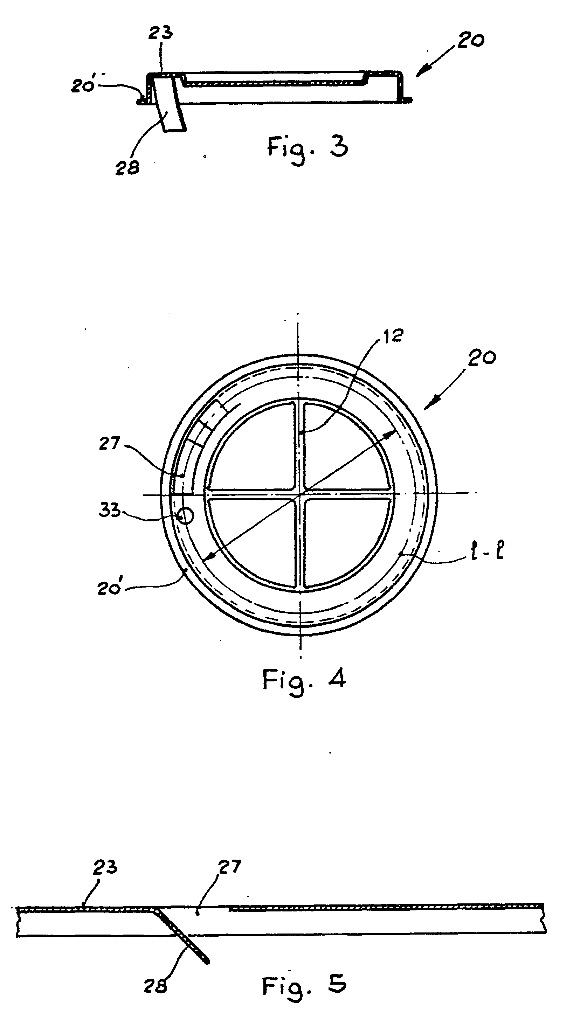

In FIG. 1, with (1) there is illustrated a hydraulic type of damping device, that is disposed at the two extremities, between an oscillating mass (2), for example, an engine of a motor-vehicle and a structure (3) fixed relatively to the oscillating mass, in the example of the car chassis.

The support (1) comprises a rigid container (4) with lateral wall (5) and base (6) enclosing a low-viscosity liquid, a first elastomeric membrane (7), with a frusto-conical shape, forming the container-lid, an elastomeric diaphragm (8), separating the space within the container into two chambers, respectively the upper chamber (9) between the lid and diaphragm, and the lower chamber (10) between the diaphragm and container.

The device has a central longitudinal axis X-X in the direction of the forces applied by the oscillating mass and the diaphragm is defined by a central plane Y-Y substantially perpendicular to the axis X-X.

The second lower chamber is closed by a second elastomeric membrane (11) sealingly connected to the lateral wall of the container and it results as being subjected to expansion, in the presence of pressure variations in the liquid.

The second elastomeric membrane (11) can have a thickness comprised within the range of values from between 1 to 3 mm.

The diaphragm (8) can oscillate, between two stop-limit elements (12,13) that result as being made solid with the lateral walls of the container.

The oscillations of the diaphragm become verified when the low-viscosity liquid, disposed in the two chambers of the support, is subjected to pressure variations caused by the high frequency and small amplitude oscillations of the mass (2).

The two chambers (9,10) are connected hydraulically by an annular conduit disposed along the central plane Y-Y.

The annular conduit, can be extended for an arc of a circle that is comprised, according to some examples, between 250 and 300 degrees.

The conduit (14) is apt for damping the low frequency and great amplitude oscillations transmitted by the mass (2) to the low viscosity liquid which liquid being composed, for example, of a mixture of water and glycol.

The fundamental characteristic of the invention lies in the fact that the same element that prooves useful for filtering the high frequency and small amplitude vibrations between engine and chassis i.e. the diaphragm (8), also forms an integrant part of the element that proves useful for damping the low frequency and small amplitude vibrations i.e. part of the annular conduit (14).

In fact, as can be clearly seen in FIG. 1, the diaphragm (8) is extended till upto the annular damping conduit, and it forms at least a portion of the conduit-wall.

For preference, the elastomeric diaphragm forms the portion (15) of the conduit wall that results as being radially innermost in the container.

More precisely, the diaphragm (8) comprises a first part, of a constant thickness, delimited by two opposite surfaces (16,17) parallel to each other, and a second part (15) that results, in the cross-section shown in FIG. 1, as being perpendicular to the first part and which forms, as was already stated, said wall of the conduit (14).

Between the central part of the diaphragm (8) and the peripheral part, there are foreseen two hinge-zones realized with two annular opposite grooves (18,19) having a U-shaped cross-section (see FIGS. 1, 6 and 7).

The form of the grooves is such as to be filled with the minimum quantity of liquid in such a way as to originate a small column of liquid interposed between the diaphragm and the stop-limit elements (12 and 13).

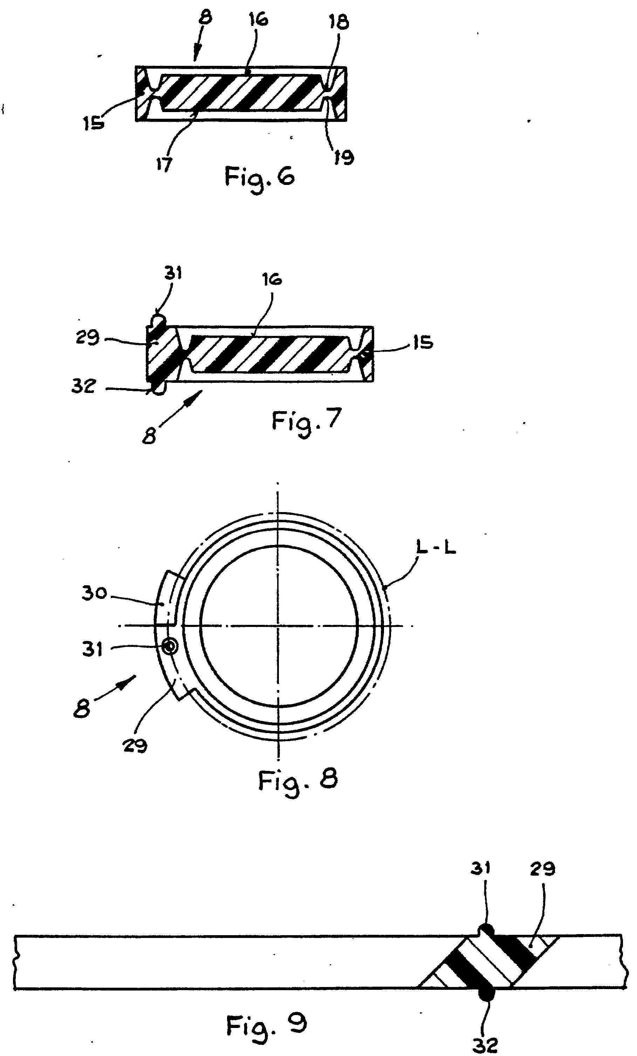

In the preferred example of FIG. 1, the diaphragm (8) is fixed to a rigid metallic structure having two halves (20,21) which are joined together for so defining the annular conduit (14). These two-halves are approached together, along two outer flanges (20',21') as seen in FIG 2.

The conduit (14) has a transversal section of a rectangular form comprising an outer side (22), bases (23,24) and two prolongations (25,26) cut away at the centre for disposing on the peripherical part (15) of diaphragm (8).

From the bases (23,24) there issue forth the stop-limit elements (12,13) in the form of radial spokes.

As can be seen in FIG. 1, the elastomeric part of the conduit is against the rigid parts (25,26) of the conduit itself.

The rigid two halves (20, 21) that originate the rigid part of the conduit (14) are identical and hence, for simplicity sake, herebelow there will only be described the part (20) illustrated in FIGS. 3 and 5.

The upper rigid half 20, comprises an opening (27) intended for placing the upper chamber (9) into communication with the conduit (14).

The aperture (27) is followed by an inclined plane (28) directed from the base 23 (FIG. 5) towards the opposite base 24 in the rectangular section of the conduit (14).

Formed analogously, is the rigid half 21 which will be provided with an aperture, for connecting the conduit (14) to the second chamber (10) and, in its turn, the said aperture will be followed by an inclined plane directed from the base 24 to the base 23, of the rigid half 20.

The space between the two inclined planes of the two rigid halves (20,21) is filled (FIG. 8) with a corresponding portion (29) of elastomeric material, forming the radially outermost part of the diaphragm (8).

Hence, the diaphragm (8) will comprise two inclined planes one of which (see top-view in FIG. 8) is indicated with the reference numeral 30.

The said portion (29), with its relative upper and lower inclined planes, forms an anchoring element between the diaphragm and the conduit 14.

Moreover and preferably, the device comprises further means, for blocking relatively to each other, the diaphragm and the annular conduit (14).

In one form of embodiment (FIGS. 6, 9) said blocking means comprise two protuberances (31,32) made on the portion (29) of the diaphragm in opposite position to each other, and with corresponding housing-seats (FIGS. 2 and 4) for the said protuberances in the form of holes (33,34), made on the opposite bases of the annular conduit (14).

The connection will now be described between the structure, comprising both, the conduit (14) as well as the diaphragm (8), and the lateral wall of the container.

The above-said structure is connected (FIGS. 1 and 3) to the container by means of the two outer flanges (20',21') of the two rigid halves (20 and 21).

The two flanges result as being one side resting against an annular seat (37) of the inner wall of the container, and a annular edge of the first membrane and the other side resting against the edge of a heel (38) which forms part of the second membrane (11).

Next, the heel (38) is pressed from the inner ridge surface (39) of the container that, in its turn, is grasped by another part of the container itself as is clearly seen in FIG. 1.

Apart from those described and illustrated, the device can also comprise other forms of embodiment. As an alternative, for example, to what has just been described, the stop-limit elements (12,13) between which the elastomeric diaphragm (8) can oscillate, could be realized with spokes - whose extension is limited till upto an annular crown (41), which leaves an empty space in its centre.

This solution presents advantages since it obviates any localization of excessively high pressures, in that point where the deflection of the elastomeric diaphragm (8) is more accentuated. Moreover, it prevents any formation of a column of water between the elastomeric diaphragm (8) and the rigid parts, that would tend to oppose having a free oscillation of the diaphragm (8).

The functioning of the device will now be described.

In the presence of high frequency vibrations of between 100 and 200 Hz. having an amplitude of between 0.1 and 0.2 mm which the outer system transmits to the liquid in the container, the elastomeric diaphragm (8) deforms by oscillating between the two stop-limit portions determined by the upper and the lower spokes (12, 13) made solid with the lateral wall of the container.

The transmission of high frequency vibrations from the liquid to the carbody and hence, to the passengers inside the car, is quite modest since the low rigidity of the diaphragm (8) translates into elastic reactions, that are of a low value when compared to the forces transmitted.

Still according to the above-cited high frequency conditions, the passage of the liquid between the two chambers (9 and 10) is not verified since the conduit (14), chosen to have suitable dimensions, offers a high resistance to any passage of the liquid.

The geometrical characteristics of the diaphragm for the filtering of the high frequency, can be comprised within the following range of values:
- thickness at the centre, between 6 and 12 mm.
- thickness in correspondence of the throat (18,19), between 0.5 and 2 mm.

In the presence of low-frequency vibrations of between 5 and 30 Hz, with an amplitude of over 1 mm for example, for vibrations due to unevenness in the the road, it becomes verified that the elastomeric diaphragm (8) is brought against the upper or lower spoke and that the liquid, in having to bear the strong compression, is made to pass by force, from one chamber into the other, through the annular conduit (14) with thus dissipating energy and in this way damping the vibrations that are transmitted to the system.

The geometrical dimensions of the annular conduit apt for determining the passage of the liquid, in the above-said conditions, are determined, in one example of realization, by an area value of 60 mm² and by a length equal to 120 mm.

The invention achieves all its pre-established aims.

In fact the presence of a wall (15) in the annular conduit (14), made out of an elastomeric material, guarantees a certain fluid-sealing, through the passage of time, and along with this, also the reliability of the device with regard to damping of the vibrations of a low frequency and great amplitude.

In particular, in the instance of vibrations of a low frequency and great amplitude, it is verified that the overpressure of the liquid tends to expand the wall (15) with therefore, increasing said wall-contact against the rigid prolongations of the conduit (14) and with obviating in this way, any whatsoever possible drawing of the liquid, from the conduit towards the outside.

Moreover, in realizing a portion of the conduit (14) from an elastomeric material, allows for annulling through the elastic expansion of wall (15), any originating of those forces which tend to draw apart the two rigid halves (20,21) of the conduit itself.

Therefore, as can be noted, the elastomeric diaphragm (8), suited for the filtering of the high frequency vibrations, also forms in the present device, a fundamental part for the purpose of the correct functioning of the damping conduit (14) for the low frequency vibrations.

In other words, in the state of the art, the diaphragm (8) foreseen only as an element apt for filtering high frequency vibrations, assumes a function here, that renders it suited for also damping low frequency vibrations.

In fact, the damping of the low frequency vibrations, takes place mainly through the forced passage, of the liquid into the conduit (14) and partly, even if to a lesser extent, through the expansion of the elastomeric wall (15), contrasted elastically by the innermost annular tract of elastomeric material that forms the base of the grooves (18,19).

What also forms a further fundamental characteristic of the invention, is the fact that the diaphragm (8) is realized so as to improve the filtering of vibrations of a high frequency i.e. the transmissibility at high frequency.

In fact, in the present device, the diaphragm (8) is extended till upto where it forms a wall of the conduit (14).

Therefore, in the present device, through the extension of the surface of the diaphragm (8), a diminishing is achieved in the rigidity of the diaphragm in presence of high frequency vibrations i.e. the values of the elastic reactions transmitted to the vehicle are reduced, therefore allowing for a better riding comfort for the car passengers.

**Claims**

1. Hydraulic type of damping device (1) disposed between a mass (2) oscillating in the direction of the device axis and a structure (3) that is fixed relatively to the oscillating mass, the said device comprising a rigid container (4) delimited by a lateral wall (5) and by a base (6), a first elastomeric membrane (7) forming the container-lid, an elastomeric diaphragm (8) defined by a central plane substantially perpendicular to the direction of the oscillations, said diaphragm dividing the space inside the container into two chambers (9, 10), respectively the upper and the lower, a second elastomeric membrane (11) being connected, in a fluid manner, to the lateral wall of the container, said second membrane forming the base of said lower chamber, with two stop-limit elements (12, 13) disposed at a distance apart from the two opposite (16, 17) surfaces of the diaphragm (8), and a low viscosity liquid introduced into the said two chambers, an annular conduit (14) provided with two extremities hydraulically connected to said first and second chambers respectively, for damping the oscillations of a low frequency and a high amplitude of the said oscillating mass, the said elastomeric diaphragm (8) being extended till upto the annular damping conduit and forming the portion (15) of the conduit wall that results radially innermost in the container, said diaphragm comprising a first part delimited by two surfaces (16, 17) opposite and parallel to each other, which is subjected to movement in the presence of vibrations of a high frequency and small amplitude, and a second peripherical part which lies in a plane axial to the device and perpendicular to the first part, said device being characterized by the fact that said conduitt (14) is formed by tow halves (20, 21) of a rigid structure which are symmetrical with respect to a central plane (y–y) perpendicular to the direction (x–x) of the vibrations transmitted from the said oscillating mass (2) to the liquid of the container (4), the said two halves forming a transversal section that comprises the outermost side (22) of the conduit (14), two opposite bases (23, 24) that are parallel to the said central plane (y–y), and two prolongations (25, 26) of said two opposite bases (23, 24) inwardly inclined to the central plane, the fourth side in said transversal section, being formed by the radially outermost annular portion (15) of the diaphragm, said annular portion resulting in contact against said prolongations of said two bases, each one of the two halves (20, 21) of said rigid structure, comprising an aperture (27) upon its base (23, 24), the two apertures of said two bases forming respectively the entry and the exit of the conduit for allowing the passage of the liquid from the upper to the lower chamber and vice-versa.

2. Device according to Claim 1 characterized by the fact that the said aperture (27) is followed by an inclined plane (28) which is directed inwardly till it comes into contact with the opposite base (24), the space devoid of liquid, in-between the two inclinded planes, being filled with a corresponding portion of elastomeric material (29) of the diaphragm (8).

3. Device, as in Claim 1, characterized by the fact that between the portion of the diaphragm forming the fourth side of the conduit and the two bases lying opposite each other, there are predisposed two hinge-zones formed by two annular slits (18, 19), having a U-shape, in a plane axial to the device.

4. Device, as in any one of the previous claims, characterized by the fact that the said diaphragm comprises blocking means, relatively to the said conduit.

5. Device, as in Claim 4, characterized by the fact that said blocking means comprise at least two protuberances (31, 31) opposite one another, disposed on the peripherical portion (29) of the diaphragm, as well as corresponding seats (33, 34) for housing the said protuberances in the said conduit walls.

6. Device, as in Claim 1, characterized by the fact that the said conduit comrises two halves drawn close and in contact with each other along two outer annular flanges (20', 21'), said flanges resulting as being fixed relatively to the lateral wall (5) of the container.

7. Device, as in Claim 6 characterized by the fact that said two flanges on the outside part of the conduit, are applied between an annular heel of the second membrane forming the base of the container and an annular edge of the first membrane forming the lid, said heel of the second membrane being thrust against one of the said flanges of the conduit, from ridge-surface (39) of the container.

8. Device, as in Claim 1, characterized by the fact that the said two stop-limit elements, are connected to said conduit.

9. Device, as in Claim 8 characterized by the fact that said stop-limit elements comprise spokes (12, 13) that extend radially, between the said conduit and an inner annular crown (41).

## Patentansprüche

1. Hydraulische Dämpfungsvorrichtung (1), die zwischen einer Masse (2), die in Richtung der Achse der Vorrichtung schwingt, und einem Gebilde (3) angeordnet ist, welches relativ zu der schwingenden Masse ortsfest ist, wobei dei Vorrichtung umfaßt: einen starren Behälter (4), der durch eine Seitenwand (5) und eine Basis (6) begrenzt ist, eine erste elastomere Membran (7), welche den Behälterdeckel bildet, eine elastomere Trennwand (8), die durch eine mittlere Ebene im wesentlichen rechtwinkelig zur Richtung der Schwingungen bestimmt ist, wobei dei Trennwand den Raum innerhalb des Behälters in zwei Kammern (9, 10), und zwar in eine obere und eine untere Kammer unterteilt, eine zweite elastomere Membran (11), die mit der Seitenwand des Behälters fluiddicht verbunden ist und die Basis der unteren Kammer bildet, wobei zwei Begrenzungselemente (12, 13) in einem Abstand von den beiden gegenüberliegenden Flächen (16, 17) der Trennwand (8) angeordnet sind und eine Flüssigkeit geringer Viskosität, die in die beiden Kammern eingefüllt ist, wobei eine ringförmige Leitung (14) vorgesehen ist, deren beide Enden mit der ersten bzw. der zweiten Kammer hydraulisch verbunden sind, um Schwingungen niedriger Frequenz und hoher Amplitude der schwingenden Masse zu dämpfen, die elastomere Trennwand (8) sich bis zu der ringförmigen Dämpfungsleitung erstreckt und denjenigen Teil (15) der Leitungswand bildet, der in dem Behälter radial innen liegt, die Trennwand einen ersten Teil, der durch zwei Flächen (16, 17), die einander gegenüber und parallel zueinander liegen, begrenzt ist und der bei Vorhandensein von Schwingungen hoher Frequenz und kleiner Amplitude einer Bewegung unterworfen wird, und einen zweiten Umfangsteil umfaßt, der in einer Ebene axial zu der Vorrichtung und rechtwinkelig zu dem ersten Teil liegt, dadurch gekennzeichnet, daß die Leitung (14) durch zwei Hälften (20, 21) eines starren Gebildes gebildet ist, die mit Bezug auf eine mittlere Ebene (Y-Y) rechtwinkelig zu der Richtung (X-X) der von der schwingenden Masse (2) auf die Flüssigkeit des Behälters (4) übertragenen Schwingungen symmetrisch sind und die einen Querschnitt bilden, der die äußerste Seite (22) der Leitung (14), zwei gegenüberliegende Basen (23, 24), die parallel zu der mittleren Ebene (Y-Y) verlaufen, und zwei Verlängerungen (25, 26) der beiden gegenüberliegenden Basen (23, 24) umfaßt, die einwärts zu der mittleren Ebene geneigt bzw. schräg verlaufen, wobei die vierte Seite des Querschnitts durch den radial äussersten ringförmigen Teil (15) der Trennwand gebildet ist, der sich in Berührung gegen die Verlängerungen der beiden Basen legt, jede der beiden Hälften (20, 21) des starren Gebildes eine Öffnung (27) an ihrer Basis (23, 24) aufweist, und die beiden Öffnungen der beiden Basen jeweils den Eintritt bzw. den Austritt der Leitung bilden, um den Durchgang von Flüssigkeit von der oberen zur unteren Kammer und umgekehrt zu ermöglichen.

2. Vorrichtung nach Anspruch 1, dadurch gekennzeichnet, daß der Öffnung (27) eine schräge Ebene (28) folgt, die einwärts gerichtet ist, bis sie mit der gegenüberliegenden Basis (24) in Berührung gelangt, wobei der keine Flüssigkeit enthaltende Raum zwischen den beiden schrägen Ebenen mit einem entsprechenden Teil (29) aus elastomerem Material der Trennwand (8) gefüllt ist.

3. Vorrichtung nach Anspruch 1, dadurch gekennzeichnet, daß zwischen dem Teil der Trennwand, der die vierte Seite der Leitung bildet, und den beiden einander gegenüberliegenden Basen zwei Scharnier- bzw. Gelenkzonen vorgesehen sind, die durch zwei ringförmige Schlitze (18, 19) gebildet sind, die in einer Ebene axial zur Vorrichtung U-Gestalt haben.

4. Vorrichtung nach irgendeinem der vorhergehenden Ansprüche, dadurch gekennzeichnet, daß die Trennwand relativ zu der Leitung Blockiermittel aufweist.

5. Vorrichtung nach Anspruch 4, dadurch gekennzeichnet, daß die Blockiermittel wenigstens zwei Vorsprünge (31, 32), die einander entgegengesetzt und an dem Umfangsteil (29) der Trennwand angeordnet sind, sowie entsprechende Sitze (33, 34) umfassen zum Aufnehmen der Vorsprünge in den Leitungswänden.

6. Vorrichtung nach Anspruch 1, dadurch gekennzeichnet, daß die Leitung zwei Hälften aufweist, die eng und in Berührung miteinander entlang zweier äußerer Flansche (20', 21') liegen, wobei die Flansche relativ zu der Seitenwand (5) des Behälters festgelegt sind.

7. Vorrichtung nach Anspruch 6, dadurch gekennzeichnet, das die beiden Flansche an dem Aussenseitenteil der Leitung zwischen einem ringförmigen Absatz der zweiten Membran, welche die Basis des Behälters bildet, und einer ringförmigen Kante der den Deckel bildenden ersten Membran angebracht sind, wobei der Absatz der zweiten Membran gegen einen der Flansche der Leitung von einer Rippenfläche (39) des Behälters gedrückt ist.

8. Vorrichtung nach Anspruch 1, dadurch gekennzeichnet, daß die beiden Begrenzungselemente mit der Leitung verbunden sind.

9. Vorrichtung nach Anspruch 8, dadurch gekennzeichnet, daß die Begrenzungselemente Speichen (12, 13) aufweisen, die sich zwischen der Leitung und einer inneren ringförmigen Krone (41) radial erstrecken.

**Revendications**

1. Dispositif amortisseur (1) de type hydraulique disposé entre une masse (2) oscillant dans la direction de l'axe des dipositifs et une structure (3) qui est fixe par rapport à la masse oscillante, ledit dispostiif comprenant un récipient rigide (4) délimité par une paroi latérale (5) et par une base (6), une première membrane en élastomère (7) formant le couvercle du récipient, un diaphragme (8) en élastomère défini par un plan central sensiblement perpendiculaire à la direction des oscillations, ledit diaphragme divisant l'espace à l'intérieur du récipient en deux chambres (9, 10), respectivement les chambres supérieure et inférieure, une deuxième membrane (11) en élastomère étant reliée, d'une manière fluidique, à la paroi latérale du récipient, ladite deuxième membrane formant la base de ladite chambre inférieure, comportant deux éléments (12, 13) de limite d'arrêt disposés à distance des deux surfaces opposées ((16, 17) du diaphragme (8), et un liquide à faible viscosité introduit dans lesdites deux chambres, un conduit annulaire (14) disposé entre deux extrémités reliées hydrauliquement auxdites première et deuxième chambres respectivement, pour amortir les oscillations de basse fréquence et de haute amplitude de ladite masse oscillante, ledit diaphragme (8) en élastomère étant étendu jusqu'au conduit annulaire d'amortissement et formant la partie (15) de la paroi de conduit qui est radialement disposée le plus à l'intérieur du récipient, ledit diaphragme comprenant une première partie délimitée par deux surfaces (16, 17) opposées et parallèles l'une à l'autre, qui st soumise à un déplacement en présence de vibrations de haute fréquence et de faible amplitude, et une deuxième partie périphérique qui est située dans un plan axial par rapport au dispositif et perpendiculaire à la première partie, ledit dispostif étant caractérisé par le fait que ledit conduit (14) est formé de deux moitiés (20, 21) d'une structure rigide qui sont symétriques par rapport au plan central (Y–Y) perpendiculaire à la direction (X–X) des vibrations transmises à partir de la masse oscillante au liquide du récipient (4), lesdites deux moitiés formant une section transversale qui comprend le côté extérieur (22) du conduit (14), deux bases opposées (23, 24) qui sont parallèles audit plan central (Y–Y) et deux prolongations (25, 26) desdites bases opposées (23, 24) inclinées vers l'intérieur vers le plan central, le quatrième côté de ladite section transversale étant formé par la partie annulaire radialement extérieure (15) du diaphragme, ladite partie annulaire venant en contact contre lesdites prolongations desdites deux bases, chacune des deux moitiés (20, 21) de ladite structure rigide comprenant une ouverture (27) sur sa base (23, 24), les deux ouvertures desdites deux bases formant respectivement l'entrée et la sortie du conduit destinées à permettre le passage du liquide depuis la chambre supérieure vers la chambre inférieure et vice-versa.

2. Dispositif selon la revendication 1, caractérisé par le fait que ladite ouverture (27) est suivie par un plan incliné (28) qui est dirigé vers l'intérieur jusqu'à ce qu'il vienne en contact avec la base opposée (24), l'espace dépourvu de liquide, entre les deux plans inclinés, étant rempli d'une partie correspondante de matière élastomère (29) du diaphragme (8).

3. Dispositif selon la revendication 1, caractérisé par le fait que, entre la partie du diaphragme formant le quatrième côté du conduti et les deux bases situées opposées l'une à l'autre, sont placées au préalable deux zones de charnière formées par deux fentes annulaires (18, 19) en forme de U, dans un plan axial du dispositif.

4. Dispositif sleon l'une quelconque des revendications précédentes, caractérisé par le fait que ledit diaphragme comprend des moyens de blocage par rapport audit conduit.

5. Dispositif selon la revendication 4, caractérisé par le fait que lesdits moyens de blocage comprennent au moins deux protubérances (31, 32) opposées l'une à l'autre, disposées sur la partie périphérique (29) du diaphragme, ainsi que des sièges correspondants (33, 34) pour loger lesdites protubérances dans lesdites parois de conduit.

6. Dispositif selon là revendication 1, caractérisé par le fait que ledit conduit comporend deux moitiés rapprochées l'une de l'autre et en contact l'une avec l'autre le long de deux brides annulaires extérieures (20', 21') de telle manière que les deux brides sont fixes par rapport à la paroi latérale (5) du récipient.

7. Dispositif selon la revendication 6, caractérisé par le fait que lesdites deux brides sur la partie extérieure du conduit sont appliquées entre un talon annulaire de la deuxième membrane formant la base du récipient et un bord annulaire de la première membrane formation le couvercle, ledit talon de la deuxième membrane étant poussé contre l'une desdites deux brides du conduit, à partir de la surface en saillie (39) du récipient.

8. Dispositif selon la revendication 1, caractérisé par le fait que lesdits deux éléments de limite d'arrêt sont reliés audit conduit.

9. Dispositif selon la revendication 8, caractérisé par le fait que lesdites éléments de limite d'arrêt comprennent des rayons (12, 13) qui s'étendent radialement, entre ledit conduit et une couronne annulaire intérieure (41).

FIG. 1

FIG. 10

FIG. 2

**Fig. 3**

**Fig. 4**

**Fig. 5**

EP 0 265 681 B1

Fig. 6

Fig. 7

Fig. 8

Fig. 9